Europäisches Patentamt

European Patent Office

Office européen des brevets

(19)

(11) Numéro de publication: **0 065 227**
**A1**

(12) **DEMANDE DE BREVET EUROPEEN**

(21) Numéro de dépôt: **82103922.9**

(22) Date de dépôt: **06.05.82**

(51) Int. Cl.³: **H 01 B 17/32,** H 01 B 19/00

(30) Priorité: **12.05.81 FR 8109398**

(43) Date de publication de la demande: **24.11.82**
**Bulletin 82/47**

(84) Etats contractants désignés: **AT BE CH DE FR GB IT LI LU NL SE**

(71) Demandeur: **CERAVER Société anonyme dite:, 12, rue de la Baume, F-75008 Paris (FR)**

(72) Inventeur: **Kaczerginski, Alexandre, 7, rue Descartes, F-03700 Bellerive sur Allier (FR)**
Inventeur: **Kaminski, Jean-Jacques, 50, route de Thiers, F-03270 Saint-Yorre (FR)**

(74) Mandataire: **Weinmiller, Jürgen et al, Zeppelinstrasse 63, D-8000 München 80 (DE)**

(54) Procédé de fabrication d'un isolateur de hauban de type composite.

(57) Procédé de fabrication d'un isolateur de hauban comportant deux ferrures d'extrémité (4, 5), un enroulement filamentaire (14) de fibres imprégnées de résine et un revêtement isolant.

Selon l'invention on réalise l'enroulement filamentaire (14) sur un mandrin provisoire (1) en un matériau soluble ou fusible serré entre les ferrures. On élimine ce mandrin provisoire avant de le remplacer par une mousse ou un gaz isolant.

## Procédé de fabrication d'un isolateur de hauban de type composite

L'invention concerne un procédé de fabrication d'un isolateur de hauban de type composite destiné à subir des efforts de traction importants par exemple sous l'effet de charges mécaniques comprises entre 20 et 200 tonnes.

On connaît par le document FR-A 1 390 405 un isolateur de hauban comportant deux armatures métalliques reliées par un tube autour duquel sont bobinées des fibres de verre de manière à constituer une nappe cylindrique terminée par deux calottes prenant appui respectivement sur deux épaulements appartenant aux armatures.

Afin d'améliorer les performances mécaniques et électriques de tels isolateurs, il a été proposé dans le document FR-A 2 198 231, d'entourer les calottes terminales par une frette en fils de verre. Cette solution n'a pas été retenue car on a observé des fissurations et des décollements entre la frette et les calottes à cause de la différence existant entre leurs coefficients de dilatation.

La présente invention a pour but d'éviter ces inconvénients.

La présente invention a pour objet un procédé de fabrication d'un isolateur de hauban de type composite comportant essentiellement les phases suivantes :

- on réalise un mandrin provisoire en un matériau soluble ou fusible,
- on intercale ce mandrin entre deux ferrures d'extrémité, les faces extrêmes du mandrin possédant une forme s'adaptant à celle des ferrures,
- on immobilise cet ensemble à l'aide d'au moins une broche traversant au moins l'une des ferrures de part en part et fixée dans l'autre,
- on réalise un enroulement filamentaire en fibres de verre imprégnées de résine autour du mandrin et des calottes d'ancrage présentées par les ferrures.
- on enlève ladite broche après durcissement de l'enroulement,
- on élimine ledit mandrin soluble,
- on remplit de manière étanche par un isolant électrique l'espace ainsi libéré.

Deux variantes de réalisation peuvent être envisagées :

Selon une première variante de réalisation :

- on avait, préalablement à l'enroulement filamentaire, appliqué un film en un matériau élastique étanche aux gaz, sur les calottes et sur le mandrin,

- on enlève la broche qui maintient les ferrures après durcissement de l'enroulement,

- on élimine le mandrin provisoire par introduction d'eau chaude, ou par chauffage,

- on remplit l'intérieur de l'isolateur d'un gaz isolant,

- on bouche les ouvertures des ferrures correspondant au passage des broches.

Selon une seconde variante de réalisation :

- on enlève la broche et on élimine le mandrin provisoire comme précédemment,

- on injecte à l'intérieur de l'isolateur une mousse isolante présentant une élasticité suffisante pour absorber les modifications de la structure dûes à la striction et l'allongement, ainsi qu'une bonne liaison à la paroi intérieure de l'enroulement filamentaire.

Pour les deux variantes, on applique ensuite sur ledit enroulement et une portion des ferrures un revêtement isolant pouvant présenter des ailettes.

L'invention va être décrite plus en détail ci-dessous à l'aide du dessin annexé, donné à titre illustratif, mais nullement limitatif et dans lequel :

- La figure 1 montre schématiquement en coupe un isolateur de la première variante après réalisation de l'enroulement filamentaire,

- les figures 2 et 3 montrent respectivement schématiquement et en coupe partielle, un isolateur de la première et de la seconde variante après confection du revêtement isolant extérieur.

Pour chacune des variantes on réalise tout d'abord un mandrin provisoire en un matériau plastique connu en soi, soluble ou fusible. Un tel matériau a la propriété d'être moulable selon les techniques usuelles ; en se refroidissant sa consistance est suffisante pour assurer toutes les opérations précisées plus loin. Il a en outre la propriété d'être soluble dans l'eau vers 80°C, et fusible vers 150°C.

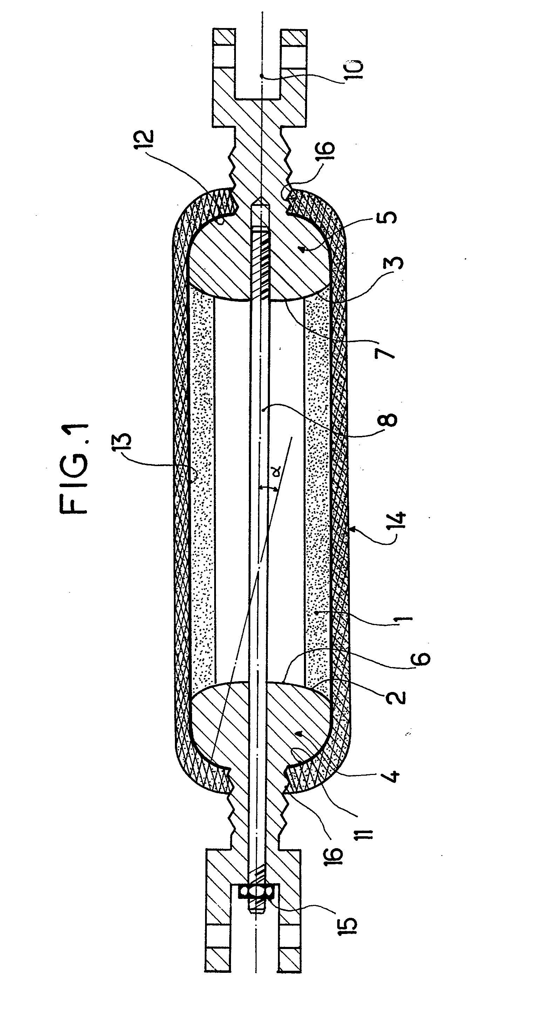

Ce mandrin apparaît sous la référence 1 dans la figure 1. Ses extrémités 2 et 3 sont usinées, (ou obtenues par coulée), de manière à être adaptées à la forme des faces 6 et 7 des ferrures 4 et 5, par exemple en acier forgé galvanisé à chaud. L'ensemble des ferrures et du mandrin est maintenu en place à l'aide d'une broche centrale 8 traversant de part en part la ferrure 4 et vissée dans la ferrure 5. L'immobilisation est schématisée par l'écrou 15.

La surface extérieure du mandrin subit un traitement destiné à la rendre anti-adhérente, tandis que les surfaces des calottes 11 et 12 sont traitées de manière à être adhérentes à un film 13 en matériau élastique de type élastomère, dont l'épaisseur est de l'ordre de quelques dizièmes de millimètres. Il est par exemple appliqué en couche mince, à l'état liquide et subit ensuite une vulcanisation ou une polymérisation à la température ambiante ou à chaud. Ce film possède les propriétés essentielles d'être isolant électriquement, étanche et résistant chimiquement aux gaz, par exemple aux gaz isolants tels que $SF_6$.

La surface externe du film est traitée de manière à favoriser l'adhérisation d'un enroulement filamentaire 14 réalisé de manière connue en soi autour du film 13 et des calottes 11 et 12. On effectue simultanément une imprégnation des fibres à l'aide d'une résine.

Si l'on désigne par l'angle d'enroulement des fibres par rapport à l'axe 10, on s'arrange pour que soit aussi faible que possible sur la partie cylindrique de l'enroulement de façon à réduire les contraintes radiales de striction consécutives à l'allongement sous traction. Remarquons que les ferrures 4 et 5 présentent de légers ancrages 16 dans l'enroulement filamentaire. On polymérise la résine à une température aussi élevée que possible, mais inférieure à la température de fusion du mandrin 1. On choisit par exemple une température de l'ordre de 120°C.

Lorsque la structure de la figure 1 est obtenue, on enlève la broche 8 et on élimine le mandrin soluble soit par lavage à l'eau chaude (de l'ordre de 80°), soit par chauffage à une température de l'ordre de 150°C, soit par une combinaison des deux procédés. Notons que ceci entraîne une "post-cuisson" de la résine de l'enroulement filamentaire 14, qui ne peut qu'entraîner une meilleure réticulation.

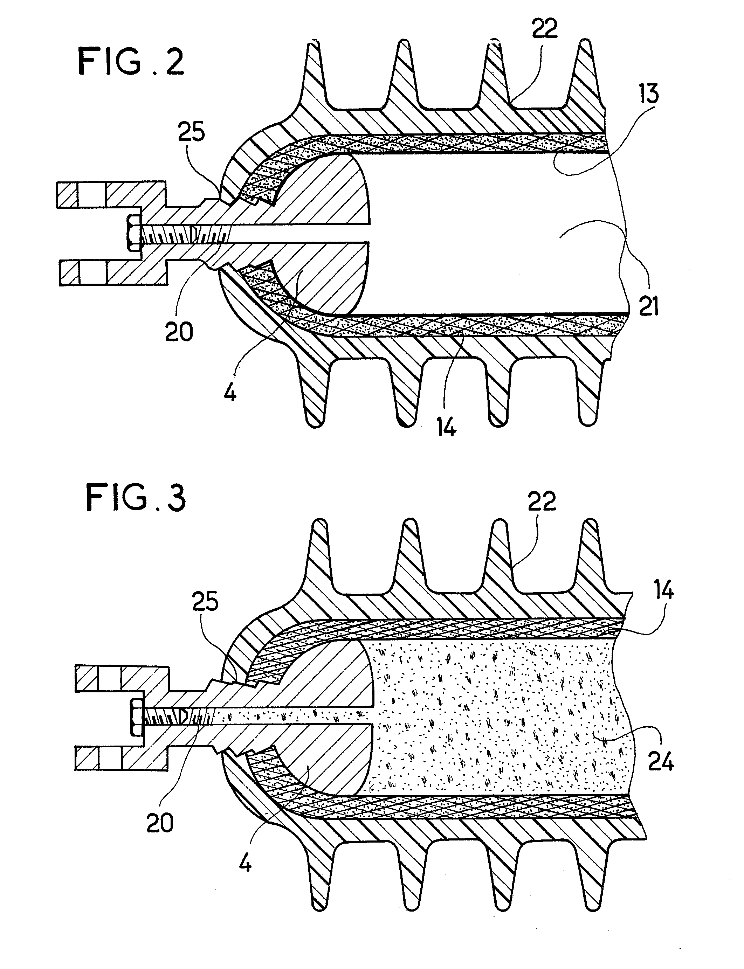

Par l'orifice 20 prévu dans la ferrure 4 (voir figure 2) on injecte un gaz isolant 21 dans l'isolateur et l'on ferme de manière étanche l'orifice 20. Après un traitement connu en soi de la surface externe de l'enroulement filamentaire 14, on surmoule sur elle et la portion adjacente des armatures, un revêtement isolant 22 comportant des ailettes et venant de préférence s'ancrer en 25 dans les armatures. Ce revêtement est par exemple de type élastomère à base d'EPDM, (ethylène-propylène-diène-monomère) ou polyuréthanes, ou silicones ou résines époxydes .

La réalisation de ce revêtement se fait par tout procédé connu, par exemple par moulage, injection, coulée par gravité, coulée par vide et pression. Ce moulage peut être total ou fractionné. On peut même assembler des ailettes unitaires sur une gaine.

Pour obtenir la variante de la figure 3, on opère de la même manière que pour réaliser la structure de la figure 1, mais sans le film 13.

Après disparition du mandrin soluble 1, et après avoir effectué un traitement de nettoyage-dégraissage, on injecte un liquide dit "primaire d'accrochage" pour traiter la surface interne de l'enroulement filamentaire 14.

On coule ensuite par l'orifice 20 de la ferrure 4 une mousse polyuréthane isolante élastique 24 dont l'agent d'expansion est par exemple le fréon ou le $SF_6$ ; on peut utiliser toute autre mousse semi-rigide ou souple, électriquement isolante, par exemple mousses de silicones. Cette mousse doit présenter une bonne adhérisation à la paroi intérieure de l'enroulement filamentaire.

On réalise ensuite un revêtement isolant 22 comme pour la variante de la figure 2.

Bien entendu, l'invention n'est pas limitée aux modes de réalisation qui viennent d'être décrits. On pourra remplacer tout moyen par un moyen équivalent.

REVENDICATIONS

1/ Procédé de fabrication d'un isolateur de hauban de type composite caractérisé par le fait qu'il comporte les phases suivantes :

- on réalise un mandrin provisoire (1) en un matériau soluble ou fusible,

- on intercale ce mandrin entre deux ferrures d'extrémité (4, 5), les faces extrêmes (2, 3) du mandrin (1) possédant une forme s'adaptant à celle des ferrures,

- on immobilise cet ensemble à l'aide d'au moins une broche (8) traversant au moins l'une des ferrures (4) de part en part et fixée dans l'autre (5),

- on réalise un enroulement filamentaire (14) en fibres de verre imprégnées de résine autour du mandrin (1) et des calottes (11, 12) d'ancrage présentées par les ferrures (4, 5),

- on enlève ladite broche (8) après durcissement de l'enroulement,

- on élimine ledit mandrin provisoire (1),

- on remplit de manière étanche par un isolant électrique l'espace aussi libéré.

2/ Procédé de fabrication selon la revendication 1, caractérisé par le fait que ledit isolant électrique est une mousse isolante injectée (24).

3/ Procédé de fabrication selon la revendication 1, caractérisé par le fait que, préalablement à l'enroulement filamentaire, on applique sur lesdites calottes d'ancrage (11, 12) et sur ledit mandrin provisoire (1), un film (13) en un matériau élastique étanche aux gaz, et que l'on remplit ledit espace libre par un gaz isolant (21).

4/ Procédé selon l'une des revendications précédentes, caractérisé par le fait que l'on applique ensuite sur ledit enroulement filamentaire et une portion desdites ferrures d'extrémité un revêtement isolant (22).

# FIG.1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 546 791 (SEDIVER) *Page 1, colonne de gauche, alinéas 2,3,6; colonne de droite, alinéas 1,2; page 2, colonne de droite, alinéas 2,3,9; page 3, colonne de gauche, alinéas 3,4; page 5, colonne de droite, dernier alinéa* | 1,2,4 | H 01 B 17/32 H 01 B 19/00 |
| A | FR-A-2 284 960 (CERAVER) *Page 1, lignes 32-40; page 3, lignes 36-39* | 1,2,4 | |
| A | US-A-3 261 910 (JACQUIER) *Colonne 1, lignes 55-68; colonne 2, lignes 65-68; figures 1,2* & FR - A - 1 378 902 | 1,3 | |

DOMAINES TECHNIQUES RECHERCHES (Int. Cl. ³)

H 01 B 17/32
H 01 B 17/02
H 01 B 17/12
H 01 B 19/00
H 01 B 17/40
H 01 B 17/38

Le présent rapport de recherche a été établi pour toutes les revendications

| Lieu de la recherche LA HAYE | Date d'achèvement de la recherche 17-08-1982 | Examinateur TIELEMANS H.L.A. |
|---|---|---|